# EUROPÄISCHE PATENTSCHRIFT

(11) **EP 3 964 422 B1**
(45) Veröffentlichungstag und Bekanntmachung des Hinweises auf die Patenterteilung: **26.07.2023**
(21) Anmeldenummer: 21187678.4
(22) Anmeldetag: 26.07.2021
(51) Int. Cl.: B62B 3/16, B62B 5/00

(54) **ROLLWAGEN ZUR AUFNAHME EINES ODER MEHRERER TRANSPORTBEHÄLTER**
TROLLEY FOR RECEIVING ONE OR MORE TRANSPORT CONTAINERS
CHARIOT PERMETTANT DE RECEVOIR AU MOINS UN RÉCIPIENT DE TRANSPORT

(30) Priorität: 08.09.2020 DE 202020105165 U
(43) Veröffentlichungstag der Anmeldung: 09.03.2022
(73) Patentinhaber: FEIL rolltainer GmbH, 59602 Rüthen (DE)
(72) Erfinder: BIEHL, Waldemar, 59581 Warstein (DE)
(74) Vertreter: Andrejewski - Honke Patent- und Rechtsanwälte Partnerschaft mbB

(56) Entgegenhaltungen:
- EP-A1- 3 546 315
- DE-A1- 19 709 689
- US-A1- 2004 090 029
- US-A1- 2014 283 713

## Beschreibung

Die Erfindung betrifft einen Rollwagen, insbesondere Transportrollwagen zur Aufnahme eines oder mehrerer Transportbehälter, mit einer Bodenplatte aus Kunststoff, ferner mit mehreren unterseitig an die Bodenplatte angeschlossenen Rollen, und mit wenigstens einer Verstärkungsschiene, wobei die Bodenplatte mit einem umlaufenden Rand ausgerüstet ist, der an einer Oberseite der Bodenplatte in einen Umlaufrand übergeht und wobei die Verstärkungsschiene im Querschnitt L-förmig ausgebildet ist.

Rollwagen und insbesondere Transportrollwagen werden beispielhaft in Verbindung mit einem Gitterwandgestell eingesetzt, wie man dies durch die EP 1 762 456 A1 der Anmelderin kennt. Darüber hinaus werden solche Rollwagen aber auch unabhängig von dem Gitterwandgestell eingesetzt, um beispielsweise in der Logistik ein oder mehrere Transportbehälter aufzunehmen. Zu diesem Zweck sind die Rollwagen meistens genormt, verfügen typischerweise über eine Grundfläche von 800 mm × 600 mm entsprechend der Größe einer sogenannten "Halbpalette" und 400 mm × 600 mm entsprechend einer "Viertelpalette".

Als Transportbehälter dienen beispielsweise solche, die sich zusammenklappen und wieder aufrichten lassen, um in ihrem Innern beispielsweise Lebensmittel aber auch Maschinenteile transportieren zu können. Ein Beispiel für einen solchen Transportbehälter zeigt unter anderem die WO 00/68099 A1. Durch den Rückgriff auf eine Bodenplatte aus Kunststoff können solche Rollwagen vorteilhaft in der Lebensmittelindustrie eingesetzt werden.

Mithilfe der Verstärkungsschiene wird die Bodenplatte aus Kunststoff im Hinblick auf die aufzunehmenden Lasten ertüchtigt, wie man dies beispielsweise durch die EP 3 213 975 A1 der Anmelderin oder auch durch die DE 197 09 689 C2 ebenfalls der Anmelderin kennt. Das hat sich grundsätzlich bewährt.

Beim gattungsbildenden Stand der Technik nach der US 2014/283713 A1 wird so vorgegangen, dass die dortige L-förmige Verstärkungsschiene einzelne Rippen an der Unterseite der Bodenplatte abstützt und zugleich zur Anbringung der dortigen Rollen dient.

Allerdings ergeben sich in der Praxis zusätzliche Anforderungen beim Transport solcher Rollwagen. Sind diese beispielsweise mit mehreren Transportbehältern beladen, so werden die ihrerseits mit beispielsweise Lebensmittel beladenen Transportbehälter auf der Bodenplatte des Rollwagens typischerweise verzurrt. Das kann an den Seiten des Transportrollwagen bei einem beispielsweise umlaufenden Zurrgurt dazu führen, dass in diesem Bereich Verformungen der Bodenplatte beobachtet werden. Darüber hinaus werden solche Transportrollwagen oftmals maschinell transportiert, beispielsweise zu einem Füllort oder auch zu Reinigungszwecken. Der Transport erfolgt dabei oftmals mithilfe von Förderketten. Hier besteht die Gefahr, dass die Bodenplatte respektive der an dieser Stelle meistens realisierte umlaufende Rand zumindest teilweise einreißt, abbricht oder sonst wie durch den Transport mithilfe der Förderkette in Mitleidenschaft gezogen wird. Hier will die Erfindung insgesamt Abhilfe schaffen.

Der Erfindung liegt das technische Problem zugrunde, einen derartigen Rollwagen und insbesondere Transportrollwagen zur Aufnahme eines oder mehrerer Transportbehälter so weiterzuentwickeln, dass Beschädigungen beim Transport wirksam vermieden werden.

Zur Lösung dieser technischen Problemstellung ist ein gattungsgemäßer Rollwagen und insbesondere Transportrollwagen zur Aufnahme eines oder mehrerer Transportbehälter im Rahmen der Erfindung gemäß Anspruch 1 dadurch gekennzeichnet, dass die Verstärkungsschiene mit ihrem hochstehenden L-Schenkel in eine randseitige Tasche der Bodenplatte von unten her eingreift, wobei die Tasche unmittelbar benachbart zu dem umlaufenden Rand der Bodenplatte angeordnet ist.

Neben dem hochstehenden L-Schenkel verfügt die im Querschnitt L-förmige Verstärkungsschiene darüber hinaus noch über einen liegenden L-Schenkel. Die Begriffe "hochstehend" ebenso wie "liegend" beziehen sich dabei auf die Gebrauchsposition des Rollwagens. In dieser Gebrauchsposition ruhen die Rollen auf einer Unterlage und ein Rand der meistens rechteckigen Bodenplatte verläuft überwiegend vertikal zur Unterlage, während sich die Bodenplatte horizontal erstreckt. Als Folge hiervon erstreckt sich der hochstehende L-Schenkel der Verstärkungsschiene parallel oder überwiegend parallel zu dem Rand der Bodenplatte, wohingegen der liegende L-Schenkel durchweg horizontal verläuft.

Dabei wird vorteilhaft so vorgegangen, dass der liegende L-Schenkel der Verstärkungsschiene nach innen weisend in einer Ausnehmung der Bodenplatte angeordnet ist. Dadurch erfährt die im Querschnitt L-förmige Verstärkungsschiene zunächst einmal eine einwandfreie und gegebenenfalls lösbare Halterung gegenüber der Bodenplatte. Denn hierzu greift der hochstehende L-Schenkel von unten her, d. h. ausgehend von der Unterseite der Bodenplatte, in die randseitige Tasche der Bodenplatte ein und ist zugleich der liegende L-Schenkel nach innen weisend in der Ausnehmung der Bodenplatte angeordnet.

Darüber hinaus wird meistens so vorgegangen, dass der hochstehende L-Schenkel als Verformungsschutzschenkel ausgebildet und an einer Seite der Bodenplatte in Anlage an dem Rand der Bodenplatte angeordnet ist. D. h., die randseitige Tasche der Bodenplatte zur Aufnahme des hochstehenden L-Schenkels schließt unmittelbar an den Rand der Bodenplatte an, sodass nach Einstecken des hochstehenden L-Schenkels der L-förmigen Verstärkungsschiene in die an den Rand der Bodenplatte anschließende Tasche der fragliche Rand der Bodenplatte die gewünschte Verstärkung erfährt. Dadurch werden etwaige Verformungen des Randes der Bodenplatte von vornherein ausgeschlossen bzw. von der Verstärkungsschiene aufgenommen.

Hinzu kommt, dass der liegende L-Schenkel in der Regel als Auflagerschutzschenkel ausgebildet ist und geringfügig über die Unterseite der Bodenplatte vorkragt. D. h., die den liegenden L-Schenkel der L-förmigen Verstärkungsschiene aufnehmende Ausnehmung in der Bodenplatte ist so gestaltet, dass der liegende L-Schenkel über die fragliche Ausnehmung zumindest geringfügig über die Unterseite der Bodenplatte vorstehen oder vorkragen kann. Grundsätzlich ist auch ein bündiger Abschluss möglich. So oder so kann der liegende L-Schenkel als gleichsam Auflager genutzt werden, nämlich insbesondere für den Transport des Rollwagens mit Hilfe einer oder mehrerer Förderketten.

Das hat zur Folge, dass die fragliche Förderkette an dem liegenden L-Schenkel anliegt und dadurch den Rollwagen beim Transport "mitnimmt". Demzufolge fungiert der liegende L-Schenkel als Auflagerschutzschenkel. Er dient nämlich zugleich als Auflager für den Rollwagen und sorgt parallel für den Schutz des Rollwagens und hier insbesondere der Unterseite der Bodenplatte.

Dabei wird meistens so vorgegangen, dass der Verformungsschutzschenkel an jeweils einer Schmalseite der Bodenplatte angeordnet ist. Hierbei geht die Erfindung davon aus, dass ein Umreifungsband oder ein Zurrgurt zur Fixierung der mehreren Transportbehälter auf der Oberseite der Bodenplatte in der Regel von der einen Schmalseite ausgeht, über die auf der Bodenplatte gestapelten Transportbehälter herum bis zur anderen Schmalseite zurückgeführt wird. Das lässt sich darauf zurückführen, dass die Transportbehälter meistens parallel zur Schmalseite auf der Oberseite der Bodenplatte abgestellt werden, sodass mit einem (einzigen) Umreifungsband bzw. Zurrgurt die sämtlichen Transportbehälter auf der Oberseite der Bodenplatte gesichert werden können. Grundsätzlich kann der Verformungsschutzschenkel auch an jeweils einer Breitseite oder Langseite der Bodenplatte angeordnet werden.

Der an jeweils der Schmalseite der Bodenplatte angeordnete Verformungsschutzschenkel der Verstärkungsschiene sorgt hier jeweils dafür, dass etwaige Verformungen der betreffenden Schmalseite durch das Umreifungsband oder den Zurrgurt wirksam vermieden werden. Zugleich stellt er an den Verformungsschutzschenkel unterseitig anschließende Auflagerschutzschenkel sicher, dass der erfindungsgemäße Rollwagen bei einem etwaigen Transport mithilfe von Fördermitteln, insbesondere Förderketten nicht beschädigt wird, insbesondere im Bereich des Randes der Bodenplatte. Das alles gelingt auf frappierend einfache Art und Weise, sodass hierin die wesentlichen Vorteile zu sehen sind.

Um die Bodenplatte insgesamt zu stabilisieren, verfügt diese in der Regel über eine unterseitige Verrippung. Dabei werden die Tasche zur Aufnahme des hochstehenden L-Schenkels der Verstärkungsschiene ebenso wie die Ausnehmung für den liegenden L-Schenkel meistens durch mehrere Rippen gebildet. Da die Bodenplatte inklusive Verrippung in der Regel durch einen Kunststoffspritzgussvorgang hergestellt wird, lassen sich die Tasche und die Ausnehmung problemlos in einen solchen Herstellungsvorgang integrieren. Es ist lediglich erforderlich, abschließend dann noch die L-förmige Verstärkungsschiene ein- bzw. aufzustecken.

Die Verstärkungsschiene verfügt in der Regel über eine durchgängige Länge, die mehr als 50 % der zugehörigen Länge der Seite der Bodenplatte beträgt. Insbesondere ist die Länge der Verstärkungsschiene so bemessen, dass sie mehr als 60 % der fraglichen Länge der Seite der Bodenplatte und insbesondere sogar 70 % im Minimum der zugehörigen Länge der Seiten der Bodenplatte einnimmt. Bei der fraglichen und mit der Verstärkungsschiene ausgerüsteten Seite der Bodenplatte handelt es sich - wie zuvor bereits erläutert - um die Schmalseite der meistens rechteckförmigen Bodenplatte. Außerdem ist die Auslegung so getroffen, dass die Verstärkungsschiene typischerweise von einer Rolle zur benachbarten Rolle an der betreffenden Seite reicht. Die Rolle bzw. eine die Rolle lagernde Konsole sorgt in diesem Zusammenhang dafür, dass die Verstärkungsschiene an ihrem Platz gehalten wird.

Hier geht die Erfindung von der Erkenntnis aus, dass etwaige Fördermittel und insbesondere ein oder mehrere Förderketten ohnehin zwischen den beiden Rollen an dem erfindungsgemäßen Rollwagen und folglich an der Unterseite der Bodenplatte angreifen. Da sich die Verstärkungsschiene zwischen den beiden Rollen erstreckt und darüber hinaus mit ihrem liegenden L-Schenkel als Auflagerschutzschenkel geringfügig über die Unterseite der Bodenplatte vorkragt, ist hierdurch sichergestellt, dass die Fördermittel und insbesondere die eine oder mehreren Förderketten mit dem fraglichen liegenden L-Schenkel wechselwirken und nicht beispielsweise mit einer unteren Kante des Randes der Bodenplatte. Damit werden an dieser Stelle etwaige Beschädigungen wirksam vermieden.

Bei der Verstärkungsschiene handelt es sich in der Regel um eine abgekantete Stahlschiene, ein sogenanntes Winkeleisen oder dergleichen. Grundsätzlich kann auch eine L-förmige Kunststoffschiene zum Einsatz kommen, die möglicherweise noch durch eingelagerte Fasern, insbesondere Glasfasern, verstärkt ist. Im Regelfall greift die Erfindung an dieser Stelle jedoch auf eine abgekantete Stahlschiene bzw. ein Winkeleisen und damit allgemein auf eine metallische Verstärkungsschiene zurück.

Um eine zusätzliche Verstärkung der Bodenplatte zu erreichen und herbeizuführen, verfügt diese zusätzlich noch über einen oder mehrere streifenartige (metallische) Verstärkungsschienen. Diese streifenartigen Verstärkungsschienen treten zu der einen oder den mehreren L-förmigen und erfindungsgemäß obligatorischen Verstärkungsschienen hinzu. Selbstverständlich sind die streifenartigen Verstärkungsschienen entbehrlich, wenn die Bodenplatte keine großen Lasten zu befördern hat.

Darüber hinaus ist die Bodenplatte in der Regel auf ihrer Oberseite mit einem Umlaufrand als Fixieranschlag für den oder die Transportbehälter ausgerüstet. Dieser Umlaufrand stellt den oberseitigen Abschluss des ohnehin umlaufenden Randes der Bodenplatte dar. Besagter Umlaufrand verfügt darüber hinaus vorteilhaft über eckseitige Entwässerungsöffnungen. Auf diese Weise verhindert die Erfindung, dass etwaiges und auf der Oberseite der Bodenplatte stehendes Wasser beispielsweise nach einem Reinigungsvorgang nicht ablaufen kann. Das ist insbesondere für den Einsatz der fraglichen Rollwagen in der Lebensmittelindustrie von besonderer Bedeutung und um etwaige Schimmelbildung zu vermeiden.

Hierzu trägt ergänzend auch der Umstand bei, dass die Bodenplatte in der Regel an ihrer Oberseite bis auf mehrere Öffnungen geschlossen ausgebildet ist. Bei diesen Öffnungen handelt es sich typischerweise um Tiefziehöffnungen, sodass in diesem Bereich vorhandenes Wasser problemlos über die Unterseite der Bodenplatte an die Umgebung abgegeben werden kann. Etwaige Wassernester können sich folglich auf der Oberseite der Bodenplatte ausdrücklich nicht bilden. Das ist aus Gründen der Hygiene besonders günstig. Derartige Maßnahmen werden zusätzlich noch dadurch unterstützt, dass die Bodenplatte geschlossen ausgebildet oder geschlossen ausgebildet sein kann. Zu diesem Zweck werden in der Regel ein die Bodenplatte bildendes Ober- und Unterteil miteinander dicht verschlossen, beispielsweise verschweißt.

Außerdem sind die vorerwähnten Öffnungen nicht nur aus Gewichtsgründen vorteilhaft, sondern können beispielsweise als Grifföffnungen fungieren oder hierfür eingesetzt werden. Dadurch lassen sich die erfindungsgemäßen Rollwagen beispielsweise von einer Bedienperson leicht ergreifen und abstellen, beispielsweise stapeln.

Zu diesem Zweck verfügen die Rollwagen bzw. die Oberseite der Bodenplatte über in der Regel ein oder mehrere Stapelmulden, die zur Aufnahme der Rollen eines hierauf oberseitig abgestellten weiteren Rollwagens dienen. Dadurch lassen sich die Rollwagen besonders kompakt stapeln und können nach Entleerung der hiermit transportierten Transportbehälter mit kompakten Abmessungen wieder zum erneuten Befüllen rücktransportiert werden. D. h., die erfindungsgemäßen Rollwagen eignen sich insbesondere im Zusammenhang mit einem umlaufenden Recyclingsystem, welches besonders ressourcenschonend arbeitet. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: den erfindungsgemäßen Rollwagen perspektivisch im Zusammenhang mit einem daraus hergestellten Stapel,
- Fig. 2: einen Blick auf die Unterseite der Bodenplatte des Rollwagens nach der Fig. 1 und
- Fig. 3: einen vergleichbaren Blick auf die Unterseite wie in der Fig. 2 bei einer abgewandelten Ausführungsform.

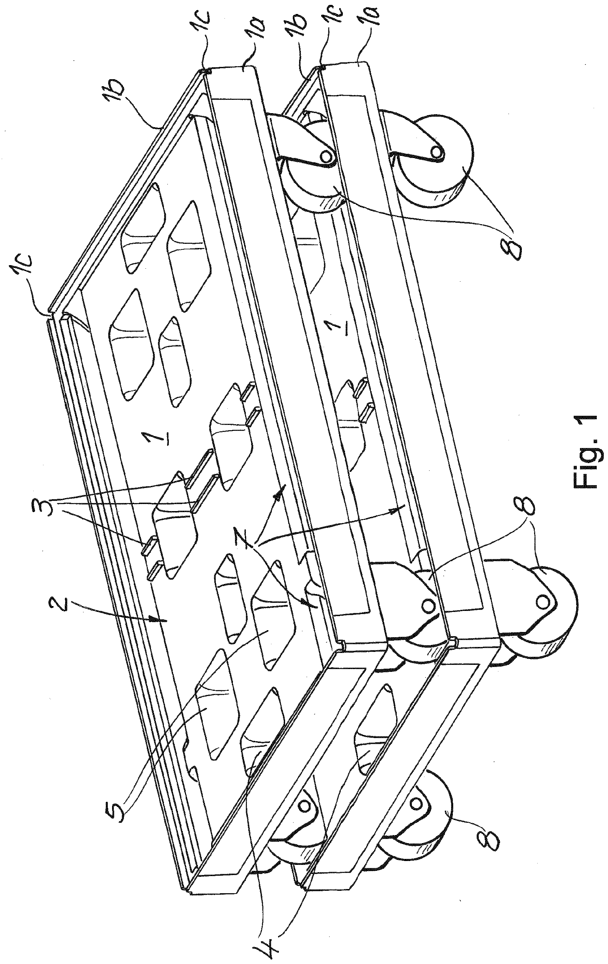

In den Figuren ist ein Rollwagen dargestellt, bei dem es sich nach dem Ausführungsbeispiel um einen Transportrollwagen zur Aufnahme eines oder mehrerer Transportbehälter handelt. Dazu verfügt der Rollwagen bzw. Transportrollwagen über eine Bodenplatte 1 aus Kunststoff. Die Bodenplatte 1 aus Kunststoff ist mit einem umlaufenden Rand 1a ausgerüstet, der an einer Oberseite 2 der Bodenplatte 1 in einen Umlaufrand 1b übergeht. Der Umlaufrand 1b ist mit eckseitigen Entwässerungsöffnungen 1c ausgerüstet, folglich im Gegensatz zum umlaufenden Rand 1a nicht vollständig geschlossen und umlaufend ausgebildet. Mithilfe des Umlaufrandes 1b als Fixieranschlag können die auf der Oberseite 2 der Bodenplatte 1 aufgenommenen und nicht ausdrücklich dargestellten ein oder mehreren Transportbehälter gesichert werden. Hierfür sind nach dem Ausführungsbeispiel in der Fig. 1 zusätzlich noch weitere Fixieranschläge 3 optional vorgesehen.

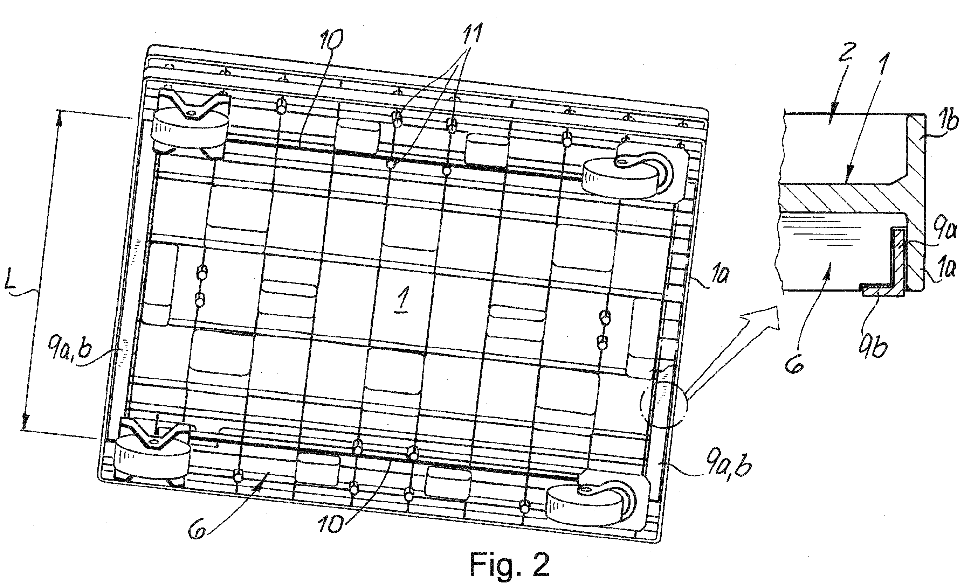

Wie einleitend bereits erläutert, ist die Oberseite 2 der Bodenplatte 1 geschlossen bis auf mehrere Öffnungen 4, 5 ausgebildet. Die Öffnungen 4, 5 in der Oberseite 2 der Bodenplatte 1 sind jeweils tiefgezogen und münden in eine in der Fig. 2 dargestellte Unterseite 6 der Bodenplatte 1, sodass hierüber etwaiges auf der ansonsten geschlossenen Oberseite 2 der Bodenplatte 1 aufstehendes Wasser nach beispielsweise einem Reinigungsvorgang abfließen kann. Mithilfe der Öffnungen 4, 5 wird das Gewicht der Bodenplatte 1 und damit des Rollwagens verringert. Außerdem fungieren die Öffnungen 4 der Öffnungen 4, 5 als Grifföffnungen 4, sodass mit ihrer Hilfe eine Bedienperson den betreffenden Rollwagen unschwer ergreifen und beispielsweise stapeln kann, wie dies in der Fig. 1 dargestellt ist.

Zu diesem Zweck sind an der Oberseite 2 der Bodenplatte 1 zusätzlich noch Stapelmulden 7 realisiert. Man erkennt, dass die Stapelmulden 7 aufgrund ihrer Tiefe eine extreme Verdichtung der übereinander gestapelten Rollwagen ermöglichen. Dazu greifen in die Stapelmulden 7 jeweils Rollen 8 eines auf die Oberseite 2 aufgesetzten weiteren Rollwagens ein. Bei den Rollen 8 handelt es sich typischerweise um einerseits Bockrollen und andererseits Lenkrollen. Es können auch ausschließlich nur Bockrollen realisiert werden. Auch die Anzahl der Rollen 8 ist insofern variabel als nicht nur die in en Ausführungsbeispielen dargestellten vier Rollen 8, sondern genauso gut auch sechs oder noch mehr Rollen 8 realisiert werden können.

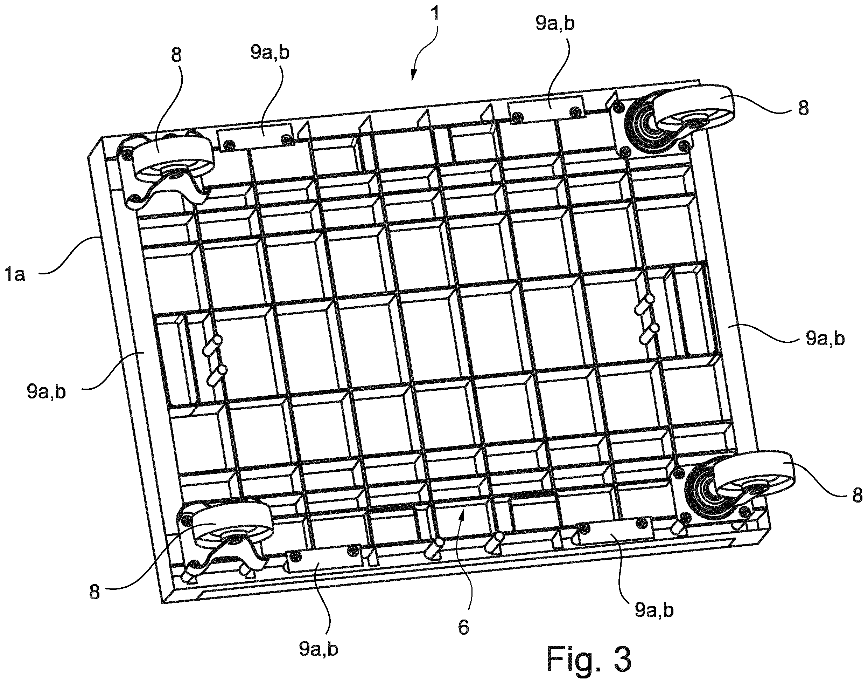

Die Rollen 8 sind dabei jeweils unterseitig bzw. an die Unterseite 6 der Bodenplatte 1 angeschlossen, wie man anhand der unterseitigen Ansicht nach den Figuren 2 und 3 erkennen kann. Das gilt selbstverständlich nur beispielhaft. Außerdem lassen sich die Bockrollen oder auch Lenkrollen grundsätzlich fixieren, was in Verbindung mit den Öffnungen 4, 5 zur Entwässerung von besonderer Bedeutung ist.

Erfindungsgemäß ist die Bodenplatte 1 aus Kunststoff mit wenigstens einer Verstärkungsschiene 9a, 9b ausgerüstet. Die Verstärkungsschiene 9a, 9b ist im Ausführungsbeispiel und im Querschnitt sowie erfindungsgemäß L-förmig ausgebildet. Tatsächlich verfügt die Verstärkungsschiene 9a, 9b über einen hochstehenden L-Schenkel 9a und einen liegenden L-Schenkel 9b. Das erkennt man anhand der Fig. 2 sowie des dort ebenfalls dargestellten vergrößerten Ausschnittes.

Dabei ist die Auslegung so getroffen, dass der hochstehende L-Schenkel 9a in eine randseitige Tasche der Bodenplatte 1 eingreift, und zwar von unten her, d. h. ausgehend von der Unterseite 6 der Bodenplatte 1. Diese Tasche ist unmittelbar benachbart zum umlaufenden Rand 1a angeordnet. Der liegende L-Schenkel 9b findet dagegen Platz in einer Ausnehmung der Bodenplatte 1. Außerdem ist der liegende L-Schenkel 9b nach innen weisend angeordnet und schließt an den hochstehenden L-Schenkel 9a an.

Der hochstehende L-Schenkel ist als Verformungsschutzschenkel ausgebildet und an jeweils einer Seite der Bodenplatte 1 in Anlage zum Rand 1a der Bodenplatte 1 angeordnet. Bei der fraglichen Seite der rechteckförmigen Bodenplatte 1 handelt es sich nach dem Ausführungsbeispiel um jeweils seine Schmalseite. D. h., beide Schmalseiten der Bodenplatte 1 sind mit jeweils der Verstärkungsschiene 9a, 9b ausgerüstet.

Außerdem ist die Auslegung so getroffen, dass der liegende L-Schenkel 9b bzw. der Auflagerschutzschenkel geringfügig über die Unterseite 6 der Bodenplatte 1 übersteht respektive vorkragt. Dadurch kann ein etwaiges Fördermittel, beispielsweise eine Förderkette oder dergleichen unmittelbar mit dem liegenden L-Schenkel 9b wechselwirken und werden Beschädigungen der Unterseite 6 der Bodenplatte 1 insbesondere im Bereich des Randes 1a vermieden. Tatsächlich verfügt die Bodenplatte 1 ausweislich der unterseitigen Ansicht nach der Fig. 2 über eine Verrippung. Die zuvor bereits angesprochene Tasche zur Aufnahme des hochstehenden L-Schenkels 9a ebenso wie die Ausnehmung 9b für den liegenden L-Schenkel 9b werden dabei durch mehrere Rippen gebildet. Dazu sind die in Längsrichtung verlaufenden Rippen im Bereich des Randes 1a der Schmalseite mit einer deutlich verringerten Rippenhöhe unter Bildung der Tasche ausgebildet. Das gilt zumindest über eine Länge L der Verstärkungsschiene.9a, 9b gesehen. Darüber hinaus verfügen die besagten Rippen in der Längsrichtung über eine geringfügig verringerte Rippenhöhe im Bereich der Ausnehmung, ebenfalls über die Länge L der Verstärkungsschiene 9a, 9b gesehen. Dadurch wird die Verstärkungsschiene 9a, 9b in der Tasche einwandfrei und axial gesichert mit ihrem hochstehenden L-Schenkel 9a aufgenommen. Zugleich steht der liegende L-Schenkel 9b in der Aufnahme über die Unterseite 6 geringfügig vor.

Die Verstärkungsschiene 9a, 9b verfügt über die durchgängige Länge L, die nach dem Ausführungsbeispiel 70 % und mehr der zugehörigen Länge der Seite der Bodenplatte 1 beträgt. Tatsächlich reicht die Verstärkungsschiene 9a, 9b nach dem Ausführungsbeispiel von einer Rolle 8 zur benachbarten Rolle 8 an der betreffenden Seite, vorliegend der jeweiligen Schmalseite der Bodenplatte 1. Die Verstärkungsschiene 9a, 9b ist nach dem Ausführungsbeispiel als abgekantete Stahlschiene oder auch als Winkeleisen ausgebildet. Grundsätzlich kann auch eine L-förmige Kunststoffschiene in diesem Zusammenhang zum Einsatz kommen.

Anhand der Fig. 2 erkennt man, dass die Bodenplatte 1 neben der L-förmigen Verstärkungsschiene 9a, 9b zusätzlich noch mit einer oder mehreren streifenartigen Verstärkungsschienen 10 ausgerüstet ist. Bei dieser einen oder den mehreren streifenartigen Verstärkungsschienen 10 handelt es sich um eine Option, von der Gebrauch gemacht wird, wenn hohe Lasten mithilfe der Bodenplatte 1 bzw. dem Rollwagen transportiert werden sollen. Der Rand 1a der Bodenplatte 1 kann zu Kennzeichnungszwecken genutzt werden, beispielsweise als Fläche zur Aufnahme ein oder mehrerer Barcodes. Auch lassen sich hier Produktkennzeichnungen anbringen. An der Unterseite 6 der Bodenplatte 1 erkennt man dann noch einzelne sogenannte Hilfsdome 11, die zur Aufnahme von Anbauteilen wie einem Seitengitter, einer Kupplung zur Herstellung eines Routenzuges aus den einzelnen Rollwagen etc. genutzt werden können.

In der Fig. 3 ist eine Unteransicht ähnlich der Fig. 2 in abgewandelter Ausführungsform dargestellt. Tatsächlich ist hier nicht nur eine Verstärkungsschiene 9a, 9b an der jeweiligen Schmalseite der Bodenplatte 1 realisiert, sondern finden sich gleich aufgebaute weitere Verstärkungsschienen 9a, 9b an der Breitseite bzw. Längsseite der rechteckförmigen Bodenplatte 1. Die Verstärkungsschiene 9a, 9b an der Schmalseite der Bodenplatte 1 wird dabei mithilfe der Rollen 8 bzw. einer die Rollen 8 lagernden Konsole zusätzlich gegen ein Herausfallen gesichert. Im Hinblick auf die Verstärkungsschiene 9a, 9b an der Längsseite bzw. Breitseite der Bodenplatte 1 sind zusätzlich zu erkennende Schrauben zur Sicherung vorgesehen.

Dabei fungieren die Verstärkungsschiene 9a, 9b an der Breitseite bzw. Längsseite der Bodenplatte 1 - wie beschrieben - einerseits zur Stabilisierung des umlaufenden Randes 1a und andererseits zur Vermeidung von Beschädigungen an der Unterseite 6 der Bodenplatte 1 insbesondere im Bereich des umlaufenden Randes 1a. Solche Beschädigungen können beispielsweise durch Förderketten entstehen, wie dies einleitend bereits beschrieben wurde.

## Patentansprüche

1. Rollwagen, insbesondere Transportrollwagen zur Aufnahme eines oder mehrerer Transportbehälter, mit einer Bodenplatte (1) aus Kunststoff, ferner mit mehreren unterseitig an die Bodenplatte (1) angeschlossenen Rollen (8), und mit wenigstens einer Verstärkungsschiene (9a, 9b), wobei
die Bodenplatte (1) mit einem umlaufenden Rand (1a) ausgerüstet ist, der an einer Oberseite (2) der Bodenplatte (1) in einen Umlaufrand (1b) übergeht, und wobei
die Verstärkungsschiene (9a, 9b) im Querschnitt L-förmig ausgebildet ist,
**dadurch gekennzeichnet, dass**
die Verstärkungsschiene (9a, 9b) mit ihrem hochstehenden L-Schenkel (9a) in eine randseitige Tasche der Bodenplatte (1) von unten her eingreift, wobei
die Tasche unmittelbar benachbart zu dem umlaufenden Rand (1a) der Bodenplatte (1) angeordnet ist.

2. Rollwagen nach Anspruch 1, **dadurch gekennzeichnet, dass** der liegende L-Schenkel (9b) der Verstärkungsschiene (9a, 9b) nach innen weisend in einer Ausnehmung der Bodenplatte (1) angeordnet ist.

3. Rollwagen nach Anspruch 1 oder 2, **dadurch gekennzeichnet, dass** der hochstehende L-Schenkel (9a) als Verformungsschutzschenkel ausgebildet und an einer Seite der Bodenplatte (1) in Anlage an einem Rand (1a) der Bodenplatte (1) angeordnet ist.

4. Rollwagen nach einem der Ansprüche 1 bis 3, **dadurch gekennzeichnet, dass** der liegende L-Schenkel (9b) als Auflagerschutzschenkel ausgebildet ist und vorzugsweise geringfügig über eine Unterseite (6) der Bodenplatte (1) vorkragt.

5. Rollwagen nach Anspruch 3 oder nach den Ansprüchen 3 und 4, **dadurch gekennzeichnet, dass** der Verformungsschutzschenkel an jeweils einer Schmalseite der Bodenplatte (1) angeordnet ist.

6. Rollwagen nach einem der Ansprüche 1 bis 5, **dadurch gekennzeichnet, dass** die Bodenplatte (1) eine unterseitige Verrippung aufweist.

7. Rollwagen nach Anspruch 6, wenn abhängig von Anspruch 2, **dadurch gekennzeichnet, dass** die Tasche und die Ausnehmung für die Verstärkungsschiene (9a, 9b) durch mehrere Rippen der Verrippung gebildet werden.

8. Rollwagen nach einem der Ansprüche 1 bis 7, **dadurch gekennzeichnet, dass** die Verstärkungsschiene (9a, 9b) eine durchgängige Länge (L) aufweist, die mehr als 50 %, insbesondere mehr als 60 % und vorzugsweise mehr als 70 % der zugehörigen Länge der Seite der Bodenplatte (1) beträgt.

9. Rollwagen nach einem der Ansprüche 1 bis 8, **dadurch gekennzeichnet, dass** die Verstärkungsschiene (9a, 9b) von einer Rolle (8) zur benachbarten Rolle (8) an der Seite der Bodenplatte (1) reicht.

10. Rollwagen nach einem der Ansprüche 1 bis 9, **dadurch gekennzeichnet, dass** die Verstärkungsschiene (9a, 9b) als abgekantete Stahlschiene, Winkeleisen oder L-förmige Kunststoffschiene ausgebildet ist.

11. Rollwagen nach einem der Ansprüche 1 bis 10, **dadurch gekennzeichnet, dass** die Bodenplatte (1) ein oder mehrere zusätzliche streifenförmige Verstärkungsschienen (10) aufweist.

12. Rollwagen nach einem der Ansprüche 1 bis 11, **dadurch gekennzeichnet, dass** die Bodenplatte (1) auf ihrer Oberseite (2) den Umlaufrand (1b) als Fixieranschlag für den/die Transportbehälter aufweist.

13. Rollwagen nach Anspruch 12, **dadurch gekennzeichnet, dass** der Umlaufrand (1b) eckseitige Entwässerungsöffnungen (1c) aufweist.

14. Rollwagen nach einem der Ansprüche 1 bis 13, **dadurch gekennzeichnet, dass** die Bodenplatte (1) an ihrer Oberseite (2) bis auf mehrere Öffnungen (4, 5) geschlossen ausgebildet ist.

15. Rollwagen nach Anspruch 14, **dadurch gekennzeichnet, dass** einzelne Öffnungen (4) als Grifföffnungen (4) ausgebildet sind.

## Claims

1. A trolley, in particular a transport trolley for receiving one or more transport containers, having a baseplate (1) consisting of plastic, also having multiple castors (8) which are connected to the underside of the baseplate (1), and having at least one reinforcement rail (9a, 9b), wherein
the baseplate (1) is equipped with a lip (1a) running around the periphery, which merges into a peripheral lip (1b) at a top side (2) of the baseplate (1), and wherein
the reinforcement rail (9a, 9b) has an L-shaped cross-section,
**characterised in that**
the reinforcement rail (9a, 9b) engages from below with its upright L-limb (9a) in a pocket at the edge of the baseplate (1), wherein
the pocket is arranged directly adjacent to the lip (1a) running around the periphery of the baseplate (1).

2. The trolley according to Claim 1,
**characterised in that**
the horizontal L-limb (9b) of the reinforcement rail (9a, 9b) is arranged pointing inwards in a recess of the baseplate (1).

3. The trolley according to Claim 1 or 2,
**characterised in that**
the upright L-limb (9a) is designed as a deformation protection limb and is arranged on a side of the baseplate (1) bearing against a lip (1a) of the baseplate (1).

4. The trolley according to any one of Claims 1 to 3,
**characterised in that**
the horizontal L-limb (9b) is designed as a support protection limb and preferably protrudes slightly from an underside (6) of the baseplate (1).

5. The trolley according to Claim 3 or according to Claims 3 and 4,
**characterised in that**
the deformation protection limb is arranged on a short side of the baseplate (1).

6. The trolley according to any one of Claims 1 to 5,
**characterised in that**
the baseplate (1) has ribbing on the underside.

7. The trolley according to Claim 6, when dependent on Claim 2,
**characterised in that**
the pocket and the recess for the reinforcement rail (9a, 9b) are formed by multiple ribs of the ribbing.

8. The trolley according to any one of Claims 1 to 7,
**characterised in that**
the reinforcement rail (9a, 9b) has a continuous length (L) which is more than 50 %, in particular more than 60 % and preferably more than 70 % of the associated length of the side of the baseplate (1).

9. The trolley according to any one of Claims 1 to 8,
**characterised in that**
the reinforcement rail (9a, 9b) extends on the side of the baseplate (1) from one castor (8) to the adjacent castor (8).

10. The trolley according to any one of Claims 1 to 9,
**characterised in that**
the reinforcement rail (9a, 9b) is in the form of a folded steel rail, angle bar or L-shaped plastic rail.

11. The trolley according to any one of Claims 1 to 10,
**characterised in that**
the baseplate (1) has one or more additional strip-shaped reinforcement rails (10).

12. The trolley according to any one of Claims 1 to 11,
**characterised in that**
the baseplate (1) has on its top side (2) the peripheral lip (1b) as a fixing stop for the transport container(s) .

13. The trolley according to Claim 12,
**characterised in that**
the peripheral lip (1b) has drainage openings (1c) at the corners.

14. The trolley according to any one of Claims 1 to 13,
**characterised in that**
the top side (2) of the baseplate (1) is closed except for multiple openings (4, 5).

15. The trolley according to Claim 14,
**characterised in that**
some openings (4) are designed as grip openings (4).

## Revendications

1. Chariot, notamment chariot de transport, destiné à recevoir un ou plusieurs conteneurs de transport, pourvu d'une plaque de fond (1) en matière plastique, pourvu par ailleurs de plusieurs roulettes (8), raccordées sur la face inférieure de la plaque de fond (1), et pourvu d'au moins une glissière de renfort (9a, 9b),
la plaque de fond (1) étant équipée d'un bord (1a) de pourtour, qui sur une face supérieure (2) de la plaque de fond (1) passe dans un bord périphérique (1b), et
la glissière de renfort (9a, 9b) étant conçue avec une section transversale en forme de L,
**caractérisé en ce que**
la glissière de renfort (9a, 9b) s'engage à partir du dessous par sa branche de L (9a) verticale dans une poche de bordure de la plaque de fond (1),
la poche étant placée au voisinage direct du bord (1a) de pourtour de la plaque de fond (1).

2. Chariot selon la revendication 1, **caractérisé en ce que** la branche de L (9b) horizontale de la glissière de renfort (9a, 9b) est placée en étant dirigée vers l'intérieur dans un évidement de la plaque de fond (1) .

3. Chariot selon la revendication 1 ou 2, **caractérisé en ce que** la branche de L (9a) verticale est conçue sous la forme d'une branche anti-déformation et est placée sur un côté de la plaque de fond (1), en appui sur un bord (1a) de la plaque de fond (1).

4. Chariot selon l'une quelconque des revendications 1 à 3, **caractérisé en ce que** la branche de L (9b) horizontale est conçue sous la forme d'une branche protectrice de support et déborde de préférence légèrement au-delà d'une face inférieure (6) de la plaque de fond (1).

5. Chariot selon la revendication 3 ou selon les revendications 3 et 4, **caractérisé en ce que** la branche anti-déformation est placée sur respectivement un côté étroit de la plaque de fond (1).

6. Chariot selon l'une quelconque des revendications 1 à 5, **caractérisé en ce que** la plaque de fond (1) comporte un nervurage sur sa face inférieure.

7. Chariot selon la revendication 6, si elle dépend de la revendication 2, **caractérisé en ce que** la poche et l'évidement pour la glissière de renfort (9a, 9b) sont constitués de plusieurs nervures du nervurage.

8. Chariot selon l'une quelconque des revendications 1 à 7, **caractérisé en ce que** la glissière de renfort (9a, 9b) présente une longueur (L) continue, qui s'élève à plus de 50 %, notamment à plus de 60 % et de préférence à plus de 70 % de la longueur correspondante du côté de la plaque de fond (1).

9. Chariot selon l'une quelconque des revendications 1 à 8, **caractérisé en ce que** la glissière de renfort (9a, 9b) va d'une roulette (8) à la roulette (8) voisine sur le côté de la plaque de fond (1).

10. Chariot selon l'une quelconque des revendications 1 à 9, **caractérisé en ce que** la glissière de renfort (9a, 9b) est conçue sous la forme d'une glissière d'acier chanfreinée, d'une cornière ou d'une glissière en matière plastique en forme de L.

11. Chariot selon l'une quelconque des revendications 1 à 10, **caractérisé en ce que** la plaque de fond (1) comporte une ou plusieurs glissières de renfort (10) supplémentaires en forme de bandes.

12. Chariot selon l'une quelconque des revendications 1 à 11, **caractérisé en ce que** la plaque de fond (1) comporte sur sa face supérieure (2) le bord périphérique (1b) en tant que butée de fixation pour le / les conteneurs de transport.

13. Chariot selon la revendication 12, **caractérisé en ce que** sur ses angles, le bord périphérique (1b) comporte des orifices de drainage (1c).

14. Chariot selon l'une quelconque des revendications 1 à 13, **caractérisé en ce que** la plaque de fond (1) est conçue en étant fermée sur sa face supérieure (2), hormis plusieurs orifices (4, 5).

15. Chariot selon la revendication 14, **caractérisé en ce que** des orifices (4) individuels sont conçus en tant qu'orifices (4) de préhension.
